# EUROPÄISCHE PATENTSCHRIFT

(11) **EP 3 715 547 B1**
(45) Veröffentlichungstag und Bekanntmachung des Hinweises auf die Patenterteilung: **23.02.2022**
(21) Anmeldenummer: 20165478.7
(22) Anmeldetag: 25.03.2020
(51) Int. Cl.: E03D 11/14, F16B 5/06

(54) **EINRICHTUNG ZUR WANDBEFESTIGUNG EINES WC BECKENS**
DEVICE FOR FIXING A WC BASIN TO THE WALL
DISPOSITIF DE FIXATION MURALE D'UNE CUVETTE DE TOILETTES

(30) Priorität: 25.03.2019 DE 202019101670 U
(43) Veröffentlichungstag der Anmeldung: 30.09.2020
(73) Patentinhaber: Walenta, Otto, 65183 Wiesbaden (DE)
(72) Erfinder: Walenta, Otto, 65183 Wiesbaden (DE)
(74) Vertreter: Meissner, Peter E.

(56) Entgegenhaltungen:
- EP-A2- 0 985 772
- EP-A2- 1 308 564
- DE-U1- 29 621 470
- DE-U1-202015 001 752
- US-A1- 2004 163 170
- US-A1- 2015 266 582

## Beschreibung

Die Erfindung betrifft eine Einrichtung zur Wandbefestigung eines WC Beckens. Üblicherweise werden WC Becken an einer der als Raumbegrenzung dienenden Wände eines Sanitärraumes befestigt, und zwar so, dass sie senkrecht von der Wand abstehen bzw. parallel zu der eine Ecke bildenden anderen Wand ausgerichtet sind.

Wenn der Raum, in dem das WC Becken aufgestellt werden soll, ausreichend groß ist, kann der Abstand zu der parallelen Wand ausreichend groß gewählt werden, so dass die Zugangsmöglichkeit zum WC Becken nicht behindert wird.

Freistehende WC Becken können auch schräg zu den Wänden ausgerichtet werden, was aber bei einer Wandmontage des WC Beckens nicht möglich ist.

Hierdurch werden somit die baulich vorgebbaren Gestaltungsmöglichkeiten wesentlich eingeschränkt.

EP 1 308 564 A2 offenbart einen Tragwandungsaufbau zur Befestigung von Sanitäreinrichtungen, umfassend, im Horizontalschnitt im wesentlichen dreieck- oder trapezförmig ausgebildete, aus einer verwindungssteifen Rahmenkonstruktion bestehenden Trägersäulen sowie zumindest einer an der jeweiligen Trägersäule befestigten und zusammen mit der Trägersäule oder den Trägersäulen einen tragenden Wandungsaufbau bildenden, flächigen Beplankung.

Es ist daher die Aufgabe der Erfindung, diesen Nachteil zu beseitigen und die Flexibilität der Einbaumöglichkeiten für ein an einer Wand zu montierendes WC Becken zu erhöhen.

Gelöst wird diese Aufgabe erfindungsgemäß durch die Einrichtung des unabhängigen Anspruchs 1.

Vorzugsweise besteht der so ausgebildete Adapter aus einem mit einer Beschichtung versehenen Stahlblech, wobei die Farbe weiß sein kann oder einen bei Sanitärobjekten üblichen Farbton aufweist.

Die die beiden großflächigen Anlageflächen verbindenden Keilflächen bestehen aus einer unteren und einer oberen Keilfläche, wobei die obere Keilfläche als Ablagefläche ausgebildet sein kann.

Der Keilwinkel kann zwischen 10 und 45° betragen.

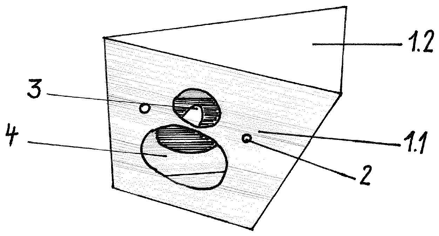

Die Erfindung soll nachfolgend mit Bezug auf die Zeichnung erläutert werden.

Die Zeichnung ist eine perspektivische Darstellung des Adapters, wobei die eine großflächige Anlagefläche, die bei dieser Darstellung nur sichtbar ist, mit 1.1 bezeichnet wurde.

Diese und die nicht dargestellte andere Anlagefläche sind oben und unten durch Keilflächen 1.2. miteinander verbunden und bilden zusammen mit der die Keilflächen und die Anlageflächen verbindenden (hier nicht sichtbaren) Wand einen geschlossenen Hohlkörper.

Eine der Anlageflächen dient zur Montage an einer Wand des Sanitärraumes, während die andere Anlagefläche (in der Zeichnung die Fläche 1.1 beispielsweise) als Anlage- oder Montagefläche für das WC Becken dient.

Beide Anlageflächen sind mit entsprechenden Durchführungen 3 und 4 für den Anschluss an eine Frischwasser- und eine Abwasserleitung versehen und weisen Befestigungsdurchbrüche 2 auf.

## Patentansprüche

1. Einrichtung zur Wandbefestigung eines WC Beckens, umfassend einen keilförmigen Adapter, der als geschlossener Hohlkörper ausgebildet ist mit zwei großflächigen Anlageflächen und die großflächigen Anlageflächen (1.1) so miteinander verbindenden Keilflächen (1.2), dass die beiden großflächigen Anlageflächen sich mit einem durch die Keilflächen (1.2) vorgegebenen Winkel gegenüber liegen, wobei eine dieser großflächigen Anlageflächen als Anlage- und Montagefläche des Adapters an der Wand und die andere großflächige Anlagefläche als Anlage- und Montagefläche für das WC Becken dient und wobei die beiden großflächigen Anlageflächen (1.1) zueinander ausgerichtete Ausnehmungen (3,4) zur Durchführung des Frisch- und Abwasserrohres aufweisen.

2. Einrichtung nach Anspruch 1,
**dadurch gekennzeichnet,**
**dass** der Adapter aus einem mit einer Beschichtung versehenen Stahlblech besteht, wobei die Farbe weiß ist oder einen bei Sanitärobjekten üblichen Farbton aufweist.

3. Einrichtung nach einem der vorstehenden Ansprüche 1 und 2,
**dadurch gekennzeichnet,**
**dass** die die großflächigen Anlageflächen (1.1) verbindenden Keilflächen (1.2) aus einer unteren und
einer oberen Keilfläche bestehen, wobei die obere Keilfläche als Ablagefläche ausgebildet ist.

## Claims

1. Device for fixing a WC basin to the wall,
comprising
a wedge-shaped adaptor which is configured as a closed hollow body with two large-area contact faces (1.1) and the wedge faces (1.2) connecting the large-area contact faces (1.1) together such that the two large-area contact faces (1.1) lie opposite each other at an angle prescribed by the wedge faces (1.2), one of these large-area contact faces serving as contact- and mounting face of the adaptor on the wall, and the other large-area contact face serving as contact- and mounting face for the WC basin, and the two large-area contact faces (1.1) having recesses (3, 4) orientated towards each other for conducting the fresh- and discharge water pipe.

2. Device according to claim 1,
**characterised in that** the adaptor consists of a steel sheet provided with a coating, the colour being white or having a shade which is normal in the case of sanitary ware.

3. Device according to one of the previous claims 1 and 2,
**characterised in that**
the wedge faces (1.2) connecting the large-area contact faces (1.1) consist of a lower and an upper wedge face, the upper wedge face being configured as shelf.

## Revendications

1. Dispositif pour la fixation murale d'une cuvette de WC,
comprenant
un adaptateur en forme de coin, qui est conçu en tant que corps creux fermé avec deux surfaces d'appui de grande surface (1.1) et des surfaces en coin (1.2) connectant entre elles les surfaces d'appui de grande surface (1.1) de sorte que les deux surfaces d'appui de grande surface (1.1) se font face avec un angle déterminé par les surfaces en coin (1.2), dans lequel une de ces surfaces d'appui de grande surface sert de surface d'appui et de montage de l'adaptateur sur le mur et l'autre surface d'appui de grande surface sert de surface d'appui et de montage pour la cuvette de WC, et dans lequel les deux surfaces d'appui de grande surface (1.1) présentent des évidements (3, 4) orientés l'un vers l'autre pour le passage du tuyau d'eau fraîche et d'eau usée.

2. Dispositif selon la revendication 1,
**caractérisé en ce**
**que** l'adaptateur est constitué d'une tôle d'acier pourvue d'un revêtement, dans lequel la couleur est blanche ou présente une teinte usuelle pour les objets sanitaires.

3. Dispositif selon l'une quelconque des revendications 1 et 2 précédentes,
**caractérisé en ce**
**que** les surfaces en coin (1.2) connectant les surfaces d'appui de grande surface (1.1) sont constituées d'une surface en coin inférieure et supérieure, dans lequel la surface en coin supérieure est conçue en tant que surface de rangement.
